# EUROPEAN PATENT APPLICATION

(11) **EP 0 947 390 A2**
(43) Date of publication of application: **06.10.1999**
(21) Application number: 99106447.8
(22) Date of filing: 29.03.1999
(51) Int. Cl.: B60R 16/02

(54) **Device to eliminate shocks from electrostatic currents**

(30) Priority: 03.04.1998 IT PN980027
(71) Applicant: Gennari, Mario, 33080 Fiume Veneto (PN) (IT)
(72) Inventor: Gennari, Mario, 33080 Fiume Veneto (PN) (IT)
(74) Representative: Petraz, Gilberto Luigi

(57) **Abstract**

Device to eliminate shocks deriving from electrostatic currents, for example when a person gets into/out of a vehicle, the vehicle comprising a passenger/driver compartment and at least one element of the mass (7) functioning as an earth, the device comprising at least a metal conductor element (1) associated with a relative component inside the passenger/driver compartment of the vehicle, an electric resistor (4) connected by means of a relative conductor cable (11) to the at least one metal conductor element (1) and a conductor cable (2) suitable to connect the electric resistor (4) to the mass element (7) of the vehicle.

## Description

This invention concerns a device to eliminate shocks deriving from electrostatic currents as set forth in the main claim.

To be more exact, the invention concerns a device which prevents a person from being subjected to electric shocks when, due to the electrostatic currents circulating through the body, he/she comes into contact with a metallic element.

The invention has its preferential, though not exclusive, application in vehicles where it is usual to be subjected to such shocks at the moment of exiting or entering said vehicle, when there is contact with the door or another metal part of the vehicle, or when the door of the garage is opened or closed, due to the electrostatic currents accumulated during the drive.

It is well-known that electrostatic energy is formed inside the driver/passenger compartment of vehicles, particularly those made mostly of plastic or fibrous material, sometimes rubber, or in any case, generally speaking, of "synthetic material".

It is also well-known that the driver himself contributes to the formation of this electrostatic energy, because his own clothing exasperates the intensity thereof if he wears even only partly synthetic fabrics.

Because the electrostatic field which is formed inside a vehicle is determined mostly by friction when the person moves, particularly when entering or leaving the vehicle with relative absorption of the positive electric charge into the body, in the moments immediately afterwards the simple contact with a highly conductive body, and of a different electrostatic structure, for example the metal of the doors, determines the annoying shock effect.

In fact, the electrostatic balance between two bodies put into reciprocal contact, in this case the man and the metal part of the vehicle (or other, for example, the metal door of the garage), is obtained through the instantaneous transmission (or discharge) of the positive charge of one towards the mass, of opposite sign, of the other.

As the small quantity of the charge absorbed by the human body (estimated in millionths of amperes) is transferred with a very high tension (estimated in tens or hundreds of thousands of volts) to the metal mass of the vehicle (or other), it meets a point of contact with an extremely limited surface, causing a small electric conflagration, which is very annoying, called shock.

There are devices on the market which propose to discharge to earth the electrostatic energy produced in vehicles by positioning metal or plastic conduction bars under the vehicle, with extremely unsatisfactory results.

Other devices have been documented or produced with the intention of discharging the energy from some of the inner components of the vehicle, such as the seats, the mats, or otherwise, by conductors from these elements to the mass of the vehicle, with equally unsatisfactory results.

The present Applicant has devised and embodied this invention to overcome this particular problem of the state of the art.

The invention is set forth and characterised in the main claim while the dependent claims describe other characteristics of the main embodiment.

The purpose of the invention is to achieve a device which will eliminate the problem of electrostatic shock which occurs when a person enters or leaves the driver/passenger compartment of a vehicle.

Shock may be caused on leaving a vehicle, in some cases, by an involuntary contact with zones which are not covered by a lining inside the doors, and in most cases happens when the door is closed from the outside.

Shock may be caused on entering a vehicle by a contact between the body and any metal element which is a part of or connected to the frame of the vehicle.

The device according to the invention comprises at least a high insulation connector block equipped and pre-disposed for the connection, by means of connectors which are also insulated, of one or more metal conductor elements.

The metal conductor elements serve to connect one or more desired components of the inner compartment of the vehicle (for example the door handles, the knob of the gear lever, the mats, etc.) to an electric resistor having an adequate value of resistance and power of absorption, contained in the connector block.

The electric resistor is in turn connected to the metal mass of the vehicle, for example a component of the frame, with a connection from the connector block.

The device according to the invention thus obtains that the electrostatic energy accumulated by the person who enters or leaves the vehicle is completely discharged on the metal mass of the vehicle, finding a direct and preferential connection through the conductor element and the electric resistor.

The energy is thus almost totally absorbed by the electric resistor contained inside the connector block.

The high resistance value causes the current circulating from the metal point of contact with the man to the metal mass of the vehicle to assume a value which is substantially imperceptible for man.

Arranging one or more conductor elements at points of contact inside the vehicle which are substantially obligatory for the man entering or leaving (handles, steering wheel, seats, etc.) eliminates the electrostatic energy automatically, without requiring any particular attention or warning to the person, who does not need to do anything except make his usual movements to open the door or get into the driver's seat.

The attached drawings are given as a non-restrictive example and show a preferential embodiment of the invention as follows:
- Fig. 1: shows a diagram of the device according to the invention;
- Fig. 2: shows the device according to the invention applied to the inner compartment of a vehicle.

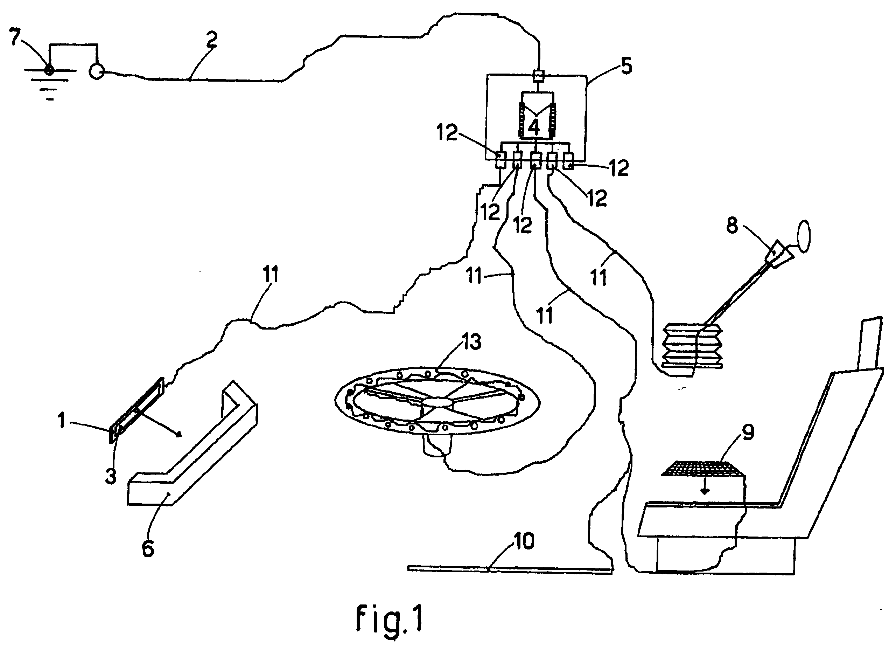

With reference to Fig. 1, a metal blade 1, a mesh, a bar, a cylinder or other metal element with characteristics of electric conductivity, is positioned in a zone where the opening handle 6 is activated and gripped by means of double-sided adhesive tape 3, or other suitable method, suitable to guarantee a rapid and long-lasting assembly.

The metal blade 1 is connected to an electric resistor 4 by means of an insulated conductor wire 11 which is attached thereto by means of an appropriate insulated connector 12.

The electric resistor 4 is located inside a connector block 5, connected in turn to the mass 7 of the vehicle, which functions as an earth, by means of a conductive cable 2.

The mass 7 may consist, for example, of a part of the frame or chassis of the vehicle itself.

Advantageously, the connector block 5 is housed in a highly insulated protective container.

According to the variants shown in Fig. 1, which can be adopted on each occasion according to requirements and specific evaluations, other elements which might come into direct contact with the man leaving or getting into the vehicle may be connected, by means of relative conductors 11 and connectors 12, to the electric resistor 4 positioned inside the connector block 5.

The Figure shows, for example, the steering wheel 13, the seat or seat cover 9, the mat 10, the knob of the gear lever 8.

According to the invention, due to the presence of the metal blade 1, or other conductor element applied on the elements such as the handles 6, steering wheel 13, or the other elements 8, 9 and 10 shown in Fig. 1, which are the last to receive contact from the man leaving the vehicle and the first to receive contact from the man entering the vehicle, it is possible to instantaneously discharge the electrostatic energy accumulated by the human body before contact with metal parts.

Moreover, the discharge occurs substantially automatically, without the user having to pay any particular attention, since the natural movement of entering or leaving the vehicle in any case takes him into contact with these conductor elements 1 associated with the components mentioned above of the compartment.

The device according to the invention is easy to apply, economical, of reduced bulk, and is substantially able to disappear inside the compartment; for these reasons it can be adapted to any vehicle, whether new or already existing, of any size, shape, engine size or brand.

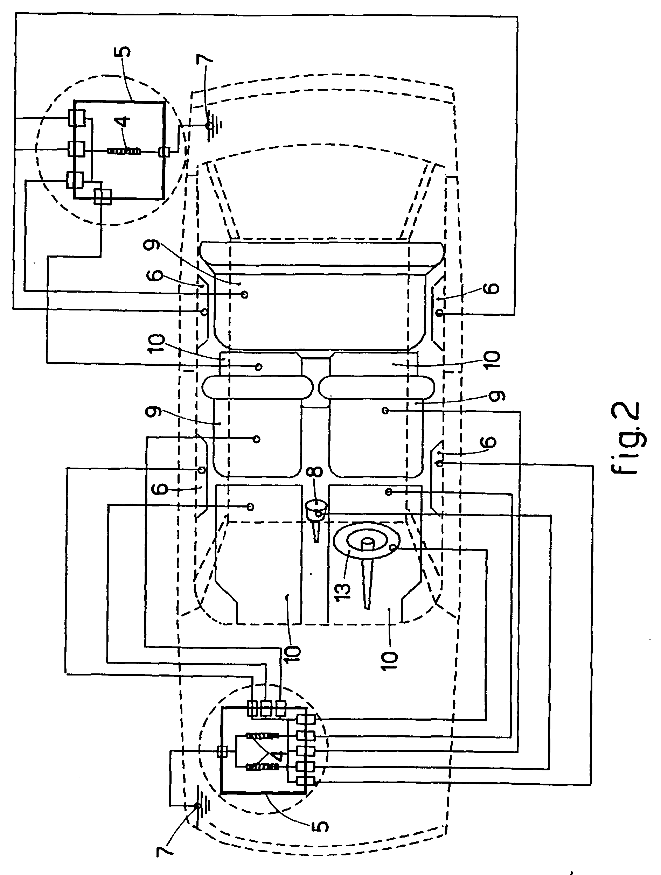

According to a variant shown in Fig. 2, the door handles 6, the steering wheel 13, the knob of the gear lever 8, the seats or seat covers 9, the mats 10, some coverings and other components of the compartment of the vehicle can be made either totally or in part of plastic material, rubber or of other properties, mixed with materials or substances which make it electrically conductive, or by the application and incorporation during the molding stage of metal wires or meshes or other electrically conductive material.

In this way, by electrically connecting the components of the compartment to one or more connector blocks 5, two in the case shown here, which may be positioned out of sight in any part of the compartment or in any part of the vehicle, the same effect is obtained and the electrostatic energy is discharged to the mass 7 of the vehicle.

Looking in detail at the steps by which the device is activated to eliminate the electrostatic shock caused by contact with a metal element of the vehicle, they can be described as follows.

To get out of the car involves the following steps:
- the user opens the door with a first hand which in most cases remains gripping the handle until the user gets out;
- the user puts out his leg.
- the body is twisted and rubs against the seat, there is contact with other synthetic parts of the vehicle and a consequent absorption of electrostatic charge.
- the user rests his other hand on the steering wheel, in some cases at the same time as he accompanies the door by gripping the handle (only for the driver).
- the user lifts his body from the seat, using his arm for help if resting on the steering wheel, with a further absorption of charge;
- the user gets out of the vehicle and receives the relative shock when he comes into contact with the metal mass of the vehicle (or other).

When the user gets into the vehicle, this is normally what happens:
- he opens the door.
- he inserts his body into the vehicle, and subsequently rubs against the seat, with absorption of charge.
- he twists his body towards the inside, with a further rubbing and consequent absorption of charge.
- he closes the door and positions his hand on the steering wheel (only the driver).

As described, the positive energy which has accumulated by the user may be discharged to the metal mass 7 of the vehicle, when the user gets out, thanks to the preceding and continuous contact of the user's hand with the conductive element 1 in the handle 6 and, if it is the driver, the probable preceding and continuous contact with the conductive element attached to the steering wheel 13.

In fact, the travel of the energy to the metal mass of the vehicle does not find a point of contact to trigger a shock, but a direct path.

Moreover, the electric resistor 4 significantly attenuates the intensity of the passing current to the mass 7, diluting in time (fractions of a second) the flow of electricity, as much as is needed to eliminate the electrostatic shock.

When the user is getting into the vehicle, the electric resistor 4 allows to absorb the electric discharge which the user has stored by friction, since this charge is discharged immediately at the first contact with the handle of the door or the steering wheel or the gear lever (in this case by the driver), since, according to this system, they are mass conductors.

The electric resistor 4 in this case too prevents the shock being produced.

Even though the invention has been described in a preferential embodiment applied to a vehicle, it is evident that it can also be applied to two-wheeled vehicles, or in other applications wherein the accumulation of electrostatic energy occurs in the human body and hence there is a need to discharge this energy before there is contact with a metal part.

## Claims

1. Device to eliminate shocks deriving from electrostatic currents, for example when a person gets into/out of a vehicle, the vehicle comprising a passenger/driver compartment and at least an element of the mass (7) functioning as an earth, the device being characterised in that it comprises at least one metal conductor element (1) associated with a relative component inside the passenger/driver compartment of the vehicle, an electric resistor (4) connected by means of a relative conductor cable (11) to the at least one metal conductor element (1) and a conductor cable (2) suitable to connect the electric resistor (4) to the mass element (7) of the vehicle.

2. Device as in Claim 1, characterised in that the metal conductor element (1) is associated with the inner handle (6) of the vehicle.

3. Device as in Claim 1 or 2, characterised in that the metal conductor element (1) is associated with the knob (8) of the gear lever.

4. Device as in any claim hereinbefore, characterised in that the metal conductor element (1) is associated with the steering wheel (13) of the vehicle.

5. Device as in any claim hereinbefore, characterised in that the metal conductor element (1) is associated with the seat or seat cover (9) of the vehicle.

6. Device as in any claim hereinbefore, characterised in that the metal conductor element (1) is associated with a mat of the vehicle.

7. Device as in Claim 1, characterised in that the electric resistor (4) is housed inside a connector block (5) arranged out of sight inside the compartment of the vehicle.

8. Device as in Claim 7, characterised in that the conductor cable (11) is connected to the connector block (5) by means of connectors (12).

9. Device as in Claim 7, characterised in that the connector block (5) is housed inside a high insulation protective container.

10. Device as in Claim 1, characterised in that the metal conductor element (1) consists of a metal blade attached by means (3) to the relative component inside the compartment.

11. Device as in Claim 1, characterised in that the metal conductor element (1) consists of wires, meshes or other electrically conductive material incorporated into the plastic or rubber material which constitutes the components present inside the compartment.
